# EUROPÄISCHE PATENTSCHRIFT

(11) **EP 0 652 625 B1**
(45) Veröffentlichungstag und Bekanntmachung des Hinweises auf die Patenterteilung: **09.06.1999**
(21) Anmeldenummer: 94250254.3
(22) Anmeldetag: 18.10.1994
(51) Int. Cl.: H02K 7/102, F16D 63/00, F16D 65/12

(54) **Elektrischer Antrieb mit Bremse, insbesondere für Hebezeuge, Hubeinrichtungen oder positionierende Förderanlagen**
Electric drive with brake, in particular for hoists, lifting devices or positioning conveyors
Entraînement électrique avec frein, notamment pour dispositifs de levage ou pour dispositifs de transport et positionnement

(30) Priorität: 05.11.1993 DE 4338570
(43) Veröffentlichungstag der Anmeldung: 10.05.1995
(73) Patentinhaber: MANNESMANN Aktiengesellschaft, 40213 Düsseldorf (DE)
(72) Erfinder: Flaig, Heinz, Dipl.-Ing., D-44797 Bochum (DE); Saeftel, Josef, D-44575 Castrop-Rauxel (DE); Bitsch, Harald, Dipl.-Ing., D-58456 Witten (DE); Dreher, Herbert, D-58452 Witten (DE); Hauschild, Axel, Dipl.-Ing., D-44141 Dortmund (DE); Kluge, Johannes, D-58300 Wetter (DE); Münzebrock, Anton, Dipl.-Ing., D-44139 Dortmund (DE); Schulte, Dirk, Dipl.-Ing., D-58239 Schwerte (DE); Staggl, Roland, D-85300 Wetter (DE); Zacharias, Karl, Dipl.-Ing., D-58239 Schwerte (DE)
(74) Vertreter: Presting, Hans-Joachim, Dipl.-Ing.

(56) Entgegenhaltungen:
- DE-A- 1 463 888
- FR-A- 753 399
- FR-A- 933 189
- FR-A- 1 309 724
- FR-A- 2 054 048
- US-A- 2 461 759
- US-A- 2 512 565
- US-A- 3 650 361
- US-A- 3 712 426

## Beschreibung

Die Erfindung betrifft einen Elektrischer Antrieb mit Bremse, insbesondere für Hebezeuge, Hubeinrichtungen oder positionierende Förderanlagen, mit einer auf der Motorwelle axial beweglichen, durch Verzahnung mit der Motorwelle rotierenden Bremsscheibe mit beidseitigen Bremsflächen, die durch Federkraft an ruhende Gegenbremsscheiben andrückbar ist und mit einer aus Wechseistrommagneten bestehenden elektromagnetischen Einrichtung, deren Bestromung ein Lüften der Bremse entgegen der Federkraft bewirkt und bei der Gegenpolflächen an allseitig winkelbeweglichen Magnetjochen angeordnet sind, die bei Bestromung der Wechselstrommagnete an den Stimflächen der gegenüber angeordneten Magnetspulenjoche ausrichtbar sind,

Im praktischen Betrieb sind überwiegend Gleichstrombremsen, eingesetzt, wie sie zum Beispiel aus der DE 13 03 888 bekannt sind,die aber langsamer arbeiten als Wechselstrombremsen und deren Zeitkonstanten nur mit zusätzlichem Aufwand verbessert werden könnten. Letzteres zeigt die US-A-3,712,426, gemäß der die Schaltzeit der dort beschriebenen Bremse durch die Verwendung zweier getrennter E-förmiger Magnetspulenjoche und einer gemeinsamen, beidseitig der Motorwelle angeordneten Spule etwas verringert wird. Für viele praktische Anwendungsfälle sind die auf dieser Art und Weise erreichbaren Schaltzeiten jedoch immer noch zu groß.

Die oben beschriebenen Bremsen wären grundsätzlich mit einphasigem Wechselstrom betreibbar, allerdings in beiden Fällen mit dem Nachteil, daß in den Nulldurchgängen des zeitlichen Stromverlaufs eine kurzzeitige Freigabe der Bremse erfolgen würde, was zu einem unerwünschten Brummen der Bremse und erfahrungsgemäß zu einer deutlichen Verringerung ihrer Lebensdauer führt.

Für die Anwendung in Hebezeugen, Hubeinrichtungen und positionierenden Förderanlagen sind Antriebe mit schnellen Bremsen von Vorteil.

Eine Lösung, die anstelle einer Gleichstrombremse eine schnelle, mit Drehstrom betriebene Bremse offenbart, zeigt die FR-A-933 189. Diese Drehstrombremse weist drei mit konstantem Winkelabstand zueinander angeordnete Spulen auf, die jeweils mit einer Phase des Drehstromnetzes betrieben werden. Die Drehstromversorgung stellt sicher, daß es während der Nulldurchgänge des zeitlichen Stromvedaufs der einzelnen Phasen zu keiner periodischen Freigabe der Bremse kommt. Weiter sorgen die drei Spulen dafür, daß eine gleichmäßige Anlage der Bremsscheibe an die Spulen sichergestellt ist, wozu zusätzlich allseitig winkelbewegliche Magnetteile vorgesehen sind. Der Nachteil der bekannten Bremse ist, daß als Stromversorgung ein Drehstromnetz vorhanden sein muß.

Zum Stand in der Technik gehören femer Wechselstrombremssysteme, deren Polflächen starr befestigt und mechanisch bearbeitet sind, so daß im Neuzustand ein kleiner Magnetspalt besteht. Diese Systeme sind infolge erforderlicher zusätzlicher mechanischer Bearbeitung teuer und reagieren äußerst empfindlich auf verschleißbedingte Magnetspaltänderungen, durch die unvermeidlich nach einiger Zeit ein unangenehmes Brummen auftritt.

Der Erfindung liegt die Aufgabe zugrunde,einen elektrischen Antrieb mit Bremse der gattungsgemäßen Art so auszubilden, daß die Bremse, ohne daß komplizierte elektronische Ansteuerschaltungen verwendet werden müssen, sehr kurze Ansprech- und Schaltzeiten auf weist, und ohne daß in den Nulldurchgängen des zeitlichen Stromverlaufs eine kurzzeifige Freigabe der Bremse erfolgt, d.h. ein Brummen der Bremse eintritt.

Die gestellte Aufgabe wird erfindungsgemäß dadurch getöst, daß die Bestromung mit einphasigem Wechselstrom erfolgt und zwei getrennte, E-förmig ausgebildete Magnetspulenjoche mit einer gemeinsamen, beidseitig der Motorwelle angeordneten Spule sowie Kurzschlußringe an den Pofflächen der Magnetspulenjoche vorgesehen sind.

Die mit der Erfindung erzielten Vorteile bestehen insbesondere darin, daß es mit der Lösung gelingt, das Magnetsystem über die gesamte Polfläche zu schließen. Die vier Außenpole legen sich bei Bestromung selbsttätig an die Stimflächen der gegenüber angeordneten Magnetspulenjoche ohne Auftreten von Kippmomenten an, so daß das unerwünschte Brummen oder eine Zerstörung der Wechselstrombremse nicht auftritt.

Nach einer weiteren Ausgestaltung ist vorgesehen, daß die E-förmigen Magnetjoche auf einer Ankerplatte allseitig federnd befestigt sind, die eine ruhende Gegenbremsscheibe bildet. Dadurch können die E-förmigen Magnetjoche z.B. über ein zentrales Gummielement formschlüssig aber momentenweich auf der Ankerplatte über kippbewegliche Balken oder dergleichen positioniert werden.

Eine andere Weiterbildung der Erfindung besteht darin, daß die gehäuseseitigen Magnetjoche mit einem Federelement unterlegt sind. Dadurch wird der Aufprallstoß beim Schließen des Magneten gemildert. Diese Stoßabschwächung führt zu einer besseren Schalt- Akustik und vor allen Dingen zu einer längeren Lebensdauer der Polflächen.

Eine besonders vorteilhafte Ausführungsform der Erfindung wird dadurch erzielt, daß die zwei E-förmigen Magnetjoche mittels kippbeweglicher, durch Stehbolzen befestigte Riegel gehalten sind, die in jeweils in dem Riegelquerschnitt entsprechende Ausnehmungen in den Magnetjochen gesteckt sind, wobei sich die Magnetjoche über die Federelemente auf die der Bremsfläche abgewandten Seite der Ankerplatte abstützen. Dadurch werden allseitige Bewegungen, d.h. Einstellungen der Polflächen erreicht.

Nach weiteren Merkmalen der Erfindung ist vorgesehen, daß die um die beiden Magnetspulenjoche verlaufende Wicklung von einem Kunststoffgehäuse umgeben ist, das in seinem Inneren Führungsschächte für die E-förmigen Magnetspulenjoche bildet. Dadurch wird eine den Funktionen angepaßte Formgestaltung erreicht.

Eine zusätzliche Ausgestaltung besteht darin, daß zwischen der Ankerplatte und einem ringförmigen Absatz des Bremsengehäuses eine die Axialbewegung der Ankerplatte elastisch aufnehmende Ringmanschette vorgesehen ist. Vorteilhafterweise wird der unvermeidliche Abrieb der Bremsflächen von den Polflächen des Magnetsystems durch diese Ringmanschette ferngehalten.

Eine besonders vorteilhafte Weiterentwicklung der Erfindung besteht darin, daß die beidseitig Bremsbeläge tragende Bremsscheibe eine aus Kunststoff angespritzte Nabe aufweist, die in der Führungsbohrung mit einer eine axiale Verschiebung ermöglichenden Verzahnung versehen ist. Dadurch, daß die Bremsscheibe als Stahl-Kunststoff-Verbundteil ausgeführt ist, sorgt die Kunststoffnabe für günstige Gleiteigenschaften ohne Reibkorrosion auf der Motorwelle. Hierbei kann eine Stahlverzahnung vollflächig von Kunststoff umschlossen sein. Andererseits wird durch die Stahlscheibe, die erst bei Verschleiß der Kunststoffverzahnung Formschluß mit der Wellenverzahnung aufweist, Durchschlagsicherheit auch bei Bruch oder bei thermischer Überlastung der Kunststoffnabe gewahrt. Ein solches System beinhaltet daher Redundanz.

Die Erfindung ist weiterhin derart gestaltet, daß die Magnetjoche mit einem vorgespannten Federelement unterlegt sind. Dadurch wird der Aufprallstoß beim Schließen des Wechselstrommagnetes gemildert.

Andere Merkmale der Erfindung bestehen darin, daß die Führungsstifte durch die Hohlniete nach außen verlängert sind. Dadurch wird eine einfache manuelle Bremslüftung ermöglicht.

Ein Ausführungsbeispiel der Erfindung ist in der Zeichnung dargestellt und wird im folgenden näher beschrieben.

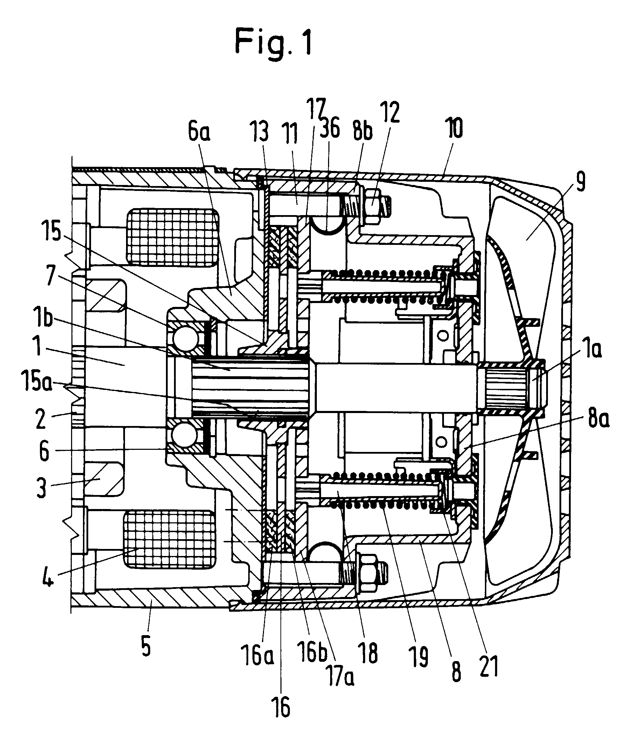

Es zeigen
- Figur 1: einen axialen Längsschnitt durch die Bremsbaugruppe des elektrischen Antriebs,
- Figur 2: einen axialen Längsschnitt durch das einzeln dargestellte Bremsengehäuse,
- Figur 2a: eine Einzelheit A gemäß Figur 2 in vergrößerter Darstellung,
- Figur 3: die zu Figur 2 gehörende Vorderansicht,
- Figur 4: einen senkrechten Schnitt A-B gemäß Figur 5 durch die Ankerplatte des E-förmigen Magnetjoches,
- Figur 5: eine zu Figur 4 gehörende Draufsicht auf die Ankerplatte,
- Figur 6: einen Schnitt A - B gemäß Fig. 7 der Bremsscheibe und
- Figur 7: eine Vorderansicht der Bremsscheibe.

Der elektrische Antrieb mit Bremse ist insbesondere für Hebezeuge, Hubeinrichtungen oder positionierende Förderanlagen einsetzbar. Der elektrische Antrieb weist wie üblich eine Motorwelle 1 mit auf einem Rotor 2 befestigten Kurzschlußringen 3 und eine Statorwicklung 4 in einem Ständergehäuse 5 auf. Die Motorwelle 1 ist in einem Flansch 6a des Läuferlagers 6 mittels üblicher Wälzlager 7 drehgelagert. Die Motorwelle 1 durchdringt sodann ein Bremsengehäuse 8 und endet mit einem, einen Lüfter 9 tragenden Wellenschaft 1a. Die vorstehend beschriebenen Teile werden im wesentlichen mittels einer Lüfterhaube 10 verschlossen.

Das Bremsengehäuse 8 ist mittels einen ringförmigen Absatz 8b durchdringender Stehbolzen 11 und Gewindemuttern 12 am Ständergehäuse 5 befestigt, wobei zwischen beiden eine Reibscheibe 13 eingespannt ist.

Die Motorwelle 1 trägt im Bereich der Reibscheibe 13 eine Verzahnung 1b, die für Formschluß mit einer axial leicht verschiebbaren Bremsscheibe 16 sorgt. Diese trägt Reibbeläge 16a und 16b und wird im Bremsfall unter der Wirkung von Druckfedern 19 zwischen einer Ankerplatte 17a und der Reibscheibe 13 eingespannt.

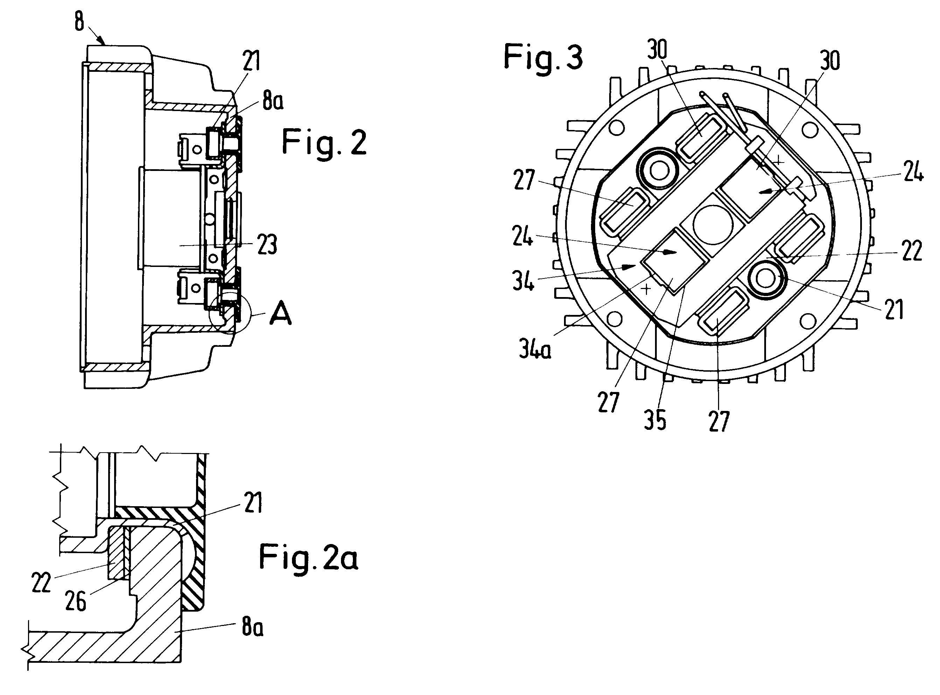

Die Druckfedern 19 werden von den Führungsstiften 18 geführt und sind gehäuseseitig positioniert durch die Hohlniete 21, die über Halteelemente 22 die Spule 23 des Wechselstrommagneten 24 halten und gleichzeitig durch eine vorgespannte flache Biegefeder 26, die den Aufprallstoß beim Schließen des Magneten abbaut, und sind an einem Bremsengehäuseboden 8a des Bremsengehäuses 8 befestigt (Fig. 2a).

Die elektromagnetische Einrichtung, deren Bestromung ein Lüften der Bremse entgegen der Federkraft der Druckfedern 19 bewirkt, besteht aus den Wechselstrommagneten 24 mit E-förmigen Magnetspulenjochen 27, um die die Spule 23 gelegt ist (Figuren 2 und 3). Gegenpolflächen 28 zu den E-förmigen Magnetjochen 27 befinden sich an ebenso E-förmigen Magnetjochen 29, die auf besondere Art auf der Gegenbremsscheibe 17, die als eine Ankerplatte 17a wirkt, gelagert sind.

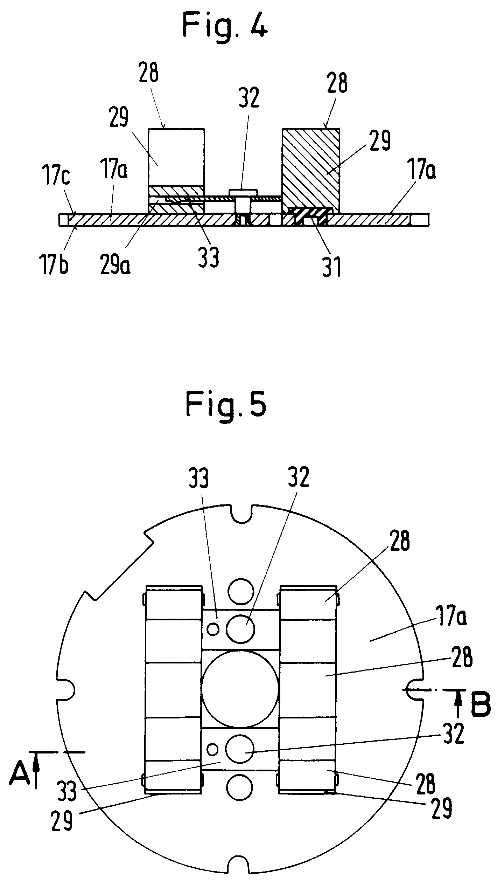

Die Magnetjoche 29 (Figuren 4 und 5) sind nunmehr bei Bestromung der Wechselstrommagnete 24 (Figuren 2 und 3) an Stirnflächen 30 (Fig. 3) der dortigen E-förmigen Magnetspulenjoche 27 ausrichtbar. Es sind zwei getrennte Magnetspulenjoche 27 mit einer gemeinsamen Spule 23 beidseitig der Motorwelle 1 angeordnet.

Die E-förmigen Magnetjoche 29 sind auf der Ankerplatte 17a, die die ruhende Gegenbremsscheibe 17 bildet, allseitig federnd befestigt (Figuren 4 und 5). Dabei sind die Magnetjoche 29 auf der Ankerplatte 17a mit einem Federelement 31 unterlegt, das aus einem Gummielement besteht.

In der dargestellten Ausführungsform (Figuren 4 und 5) sind die zwei E-förmigen Magnetjoche 29 mittels kippbeweglichen, jeweils durch Stehbolzen 32 befestigte Riegel 33 gehalten, die in jeweils in dem Riegelquerschnitt entsprechenden Ausnehmungen 29a gesteckt sind. Die Magnetjoche 29 stützen sich somit über die Federelemente 31 und die Riegel 33 auf eine der Bremsfläche 17b abgewandte Seite 17c der Ankerplatte 17a.

Weiterhin ist die um die beiden Magnetspulenjoche 27 verlaufende Spule 23 von einem Kunststoffgehäuse 34 umgeben. In dessen Innerem 34a sind Führungsschächte 35 für die E-förmigen Magnetspulenjoche 27 bzw. Magnetjoche 29 gebildet.

Zwischen der Ankerplatte 17a und einem ringförmigen Absatz 8b des Bremsengehäuses 8 ist eine die Axialbewegung der Ankerplatte 17a elastisch aufnehmende und gegen Abrieb schützende Ringmanschette 36 eingelegt.
Die beidseitig Bremsbeläge 16a, 16b tragende Bremsscheibe 16 weist eine aus Kunststoff angespritzte Nabe 15 auf, die in ihrer Führungsbohrung 15a mit der eine axiale Verschiebung ermöglichenden Kunststoff-Verzahnung 1b versehen ist.

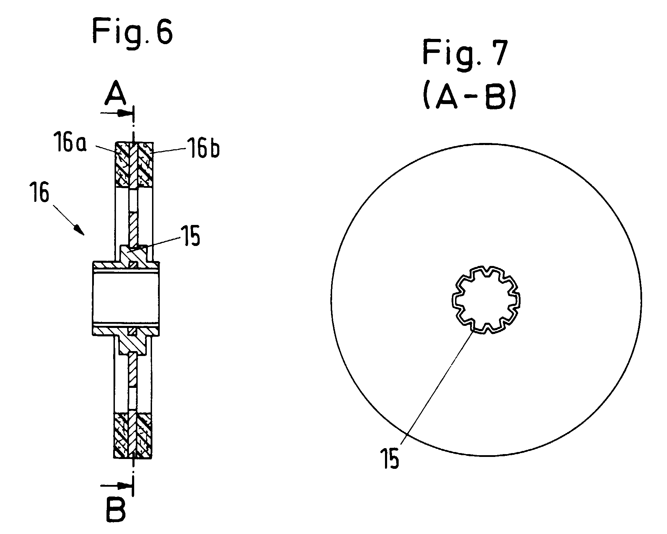

Die Kunststoff-Verzahnung 1b umschließt vollflächig eine Stahlverzahnung gleichen Moduls (Fig. 6 und 7).

### Bezugszeichenliste

- 1: Motorwelle
- 1a: Wellenschaft
- 1b: Verzahnung
- 2: Rotor
- 3: Kurzschlußringe
- 4: Statorwicklung
- 5: Ständergehäuse
- 6: Läuferlager
- 6a: Flansch
- 7: Wälzlager
- 8: Bremsengehäuse
- 8a: Bremsengehäuseboden
- 8b: ringförmiger Absatz
- 9: Lüfter
- 10: Lüfterhaube
- 11: Stehbolzen
- 12: Gewindemutter
- 13: Reibscheibe
- 15: Nabe
- 15a: Führungsbohrung
- 16: Bremsscheibe
- 16a: Bremsbelag
- 16b: Bremsbelag
- 17: Gegenbremsscheibe
- 17a: Ankerplatte
- 17b: Bremsfläche
- 17c: Seite
- 18: Führungsstifte
- 19: Druckfedern
- 21: Hohlniete
- 22: Halteelement
- 23: Spule
- 24: Wechselstrommagnete
- 26: Biegefeder
- 27: E-förmige Magnetspulenjoche
- 28: Gegenpolfläche
- 29: Magnetjoche
- 29a: Ausnehmungen
- 30: Stirnflächen
- 31: Federelement
- 32: Stehbolzen
- 33: Riegel
- 34: Kunststoffgehäuse
- 34a: Inneres des Kunststoffgehäuses
- 35: Führungsschächte
- 36: Ringmanschette

## Patentansprüche

1. Elektrischer Antrieb mit Bremse, insbesondere für Hebezeuge, Hubeinrichtungen oder positionierende Förderanlagen, mit einer auf der Motorwelle axial beweglichen, durch Verzahnung mit der Motorwelle rotierenden Bremsscheibe mit beidseitigen Bremsflächen, die durch Federkraft an ruhende Gegenbremsscheiben andrückbar ist und mit einer aus Wechseistrommagneten bestehenden elektromagnetischen Einrichtung, deren Bestromung ein Lüften der Bremse entgegen der Federkraft bewirkt und bei der Gegenpolflächen an allseitig winkelbeweglichen Magnetjochen angeordnet sind, die bei Bestromung der Wechselstrommagnete an den Stimflächen der gegenüber angeordneten Magnetspulenjoche ausrichtbar sind, dadurch gekennzeichnet,
daß die Bestromung mit einphasigem Wechselstrom erfolgt und zwei getrennte, E-förmig ausgebildete Magnetspulenjoche (27) mit einer gemeinsamen, beidseitig der Motorwelle (1) angeordneten Spule (23) sowie Kurzschlußringe an den Pofflächen der Magnetspulenjoche (27) vorgesehen sind.

2. Elektrischer Antrieb nach Anspruch 1,
dadurch gekennzeichnet,
daß die E-förmigen Magnetjoche (29) auf einer Ankerplatte (17a) allseitig federnd befestigt sind, die eine ruhende Gegenbremsscheibe (17) bildet.

3. Elektrischer Antrieb nach einem der Ansprüche 1 oder 2,
dadurch gekennzeichnet,
daß die gehäuseseitigen Magnetjoche (29) mit einem Federelement (31) unterlegt sind.

4. Elektrischer Antrieb nach einem der Ansprüche 1 bis 3,
dadurch gekennzeichnet,
daß die zwei E-förmigen Magnetjoche (29) mittels kippbeweglichen, durch Stehbolzen (32) befestigte Riegel (33) gehalten sind, die in jeweils in dem Riegelquerschnitt entsprechende Ausnehmungen (29a) in den Magnetjochen (29) gesteckt sind, wobei sich die Magnetjoche (29) über die Federelemente (31) auf die der Bremsfläche (17b) abgewandten Seite (17c) der Ankerplatte (17a) abstützen.

5. Elektrischer Antrieb nach einem der Ansprüche 1 bis 4,
dadurch gekennzeichnet,
daß die um die beiden Magnetspulenjoche (27) verlaufende Wicklung (23) von einem Kunststoffgehäuse (34) umgeben ist, das in seinem Inneren (34a) Führungsschächte (35) für die E-förmigen Magnetspulenjoche (27) bildet.

6. Elektrischer Antrieb nach einem der Ansprüche 1 bis 5,
dadurch gekennzeichnet,
daß zwischen der Ankerplatte (17a) und einem ringförmigen Absatz (8b) des Bremsengehäuses (8) eine die Axialbewegung der Ankerplatte (17a) elastisch aufnehmende Ringmanschette (36) vorgesehen ist.

7. Elektrischer Antrieb nach einem der Ansprüche 1 bis 6,
dadurch gekennzeichnet,
daß die beidseitig Bremsbeläge (16a, 16b) tragende Bremsscheibe (16) eine aus Kunststoff angespritzte Nabe (15) aufweist, die in der Führungsbohrung (15a) mit einer eine axiale Verschiebung ermöglichenden Verzahnung (1b) versehen ist.

8. Elektrischer Antrieb nach einem der Ansprüche 1 bis 7,
dadurch gekennzeichnet,
daß die Magnetjoche (29) mit einem vorgespannten Federelement (31) unterlegt sind.

9. Elektrischer Antrieb nach einem der Ansprüche 1 bis 8,
dadurch gekennzeichnet,
daß die Führungsstifte (18) durch die Hohlniete (21) nach außen verlängert sind.

## Claims

1. Electric drive with brake, in particular for hoists, lifting devices or positioning conveyors, having a brake disc axially movable on the motor shaft and rotatable with the motor shaft by splining with bilateral braking surfaces, which splining is pressable by spring pressure against stationary counter-braking discs and comprising an electromagnetic device consisting of AC magnets, which when supplied with power effects lifting of the brake against spring pressure and in which opposite-pole faces are disposed on magnet yokes, which are capable of angular displacement on all sides and which, when power is supplied to the AC magnets, are capable of being aligned with the end faces of the opposite magnetic coil yokes, characterised in that power is supplied as single-phase alternating current and two separate E-shaped magnetic coil yokes (27) are provided with a common coil (23) disposed on either side of the motor shaft (1) and with short-circuiting rings on the pole faces of the magnetic coil yokes (27).

2. Electric drive according to claim 1, characterised in that the E-shaped magnet yokes (29) are fixed resiliently all round on an anchoring plate (17a), which forms a stationary counter-braking disc (17).

3. Electric drive according to one of claims 1 or 2, characterised in that the magnet yokes (29) on the housing are underlaid by a resilient element (31).

4. Electric drive according to one of claims 1 to 3, characterised in that the two E-shaped magnet yokes (29) are held by tiltable bolts (33) which are fixed with stay bolts (32) and which are each inserted in recesses (29a) in the magnet yokes (29) corresponding to the bolt cross-section, the magnet yokes (29) bearing via resilient elements (31) on the side (17c) of the anchoring plate (17a) remote from the braking surface (17b).

5. Electric drive according to one of claims 1 to 4, characterised in that the winding (23) extending around the two magnetic coil yokes (27) is surrounded by a plastics housing (34), which in its interior (34a) forms guide shafts (35) for the E-shaped magnetic coil yokes (27).

6. Electric drive according to one of claims 1 to 5, characterised in that between the anchoring plate (17a) and an annular shoulder (8b) of the brake housing (8) an annular sleeve (36) is provided, which resiliently absorbs the axial motion of the anchoring plate (17a).

7. Electric drive according to one of claims 1 to 6, characterised in that the braking disc carrying bilateral brake linings (16a, 16b) has a moulded-on plastics hub (15), which is provided in the guide bore (15a) With splining (1b) permitting axial displacement.

8. Electric drive according to one of claims 1 to 7, characterised in that the magnet yokes (29) are underlaid by a prestressed spring element (31).

9. Electric drive according to one of claims 1 to 8, characterised in that the guide pins (18) are extended outwards through the hollow rivets (21).

## Revendications

1. Entraînement électrique à frein, en particulier pour des outils de levage, des dispositifs élévateurs ou des installations de transport de positionnement, comportant un disque de frein axialement mobile sur l'arbre moteur et tournant par engrènement avec l'arbre moteur, ayant des surfaces de freinage bilatérales, qui peut être pressé par une force élastique contre des disques de contre-freinage fixes, et un dispositif électromagnétique constitué d'aimants à courant alternatif, dont l'alimentation en courant permet un desserrage du frein à l'encontre de la force élastique et dans lequel sont agencées des surfaces de pôles opposés sur des culasses d'aimant angulairement mobiles de tous les côtés, qui, lors de l'alimentation en courant des aimants à courant alternatif, peuvent être orientées sur les surfaces frontales des culasses de bobine d'aimant agencées de façon opposée,
caractérisé en ce que l'alimentation en courant est effectuée par un courant alternatif à une phase et deux culasses de bobine d'aimant séparées, réalisées en forme de E (27) sont munies d'une bobine commune (23) agencée des deux côtés de l'arbre moteur (1) ainsi que de bagues de court-circuit sur les surfaces polaires des culasses de bobine d'aimant (27).

2. Entraînement électrique selon la revendication 1,
caractérisé en ce que les culasses d'aimant en forme de E (29) sont fixées de façon élastique, de tous côtés, sur une plaque d'induit (17a), qui forme un disque de contre-freinage fixe (17).

3. Entraînement électrique selon une des revendications 1 ou 2,
caractérisé en ce que les culasses d'aimant (29), du côté du carter, sont doublées par un élément élastique (31).

4. Entraînement électrique selon une des revendications 1 à 3,
caractérisé en ce que les deux culasses d'aimant en forme de E (29) sont maintenues au moyen de verrous (33), pouvant basculer, fixés par des tirants (32), qui sont enfichés, à chaque fois, dans des évidements (29a), correspondant à la section transversale des verrous, dans les culasses d'aimant (29), les culasses d'aimant (29) s'appuyant, par l'intermédiaire des éléments élastiques (31), sur le côté (17c) de la plaque d'induit (17a) opposé à la surface de freinage (17b).

5. Entraînement électrique selon une des revendications 1 à 4,
caractérisé en ce que l'enroulement (23) s'étendant autour des deux culasses de bobine d'aimant (27) est entouré par un boîtier de matière synthétique (34), qui forme, à l'intérieur (34a) de celui-ci, des gaines de guidage (35) pour les culasses de bobine d'aimant en forme de E (27).

6. Entraînement électrique selon une des revendications 1 à 5,
caractérisé en ce que, entre la plaque d'induit (17a) et un décrochement annulaire (8b) du carter de frein (8), il est prévu un manchon annulaire (36) recevant élastiquement le mouvement axial de la plaque d'induit (17a).

7. Entraînement électrique selon une des revendications 1 à 6,
caractérisé en ce que le disque de frein (16) portant, des deux côtés, des garnitures de frein (16a,16b) présente un moyeu (15) injecté en matière synthétique, qui est muni, dans le perçage de guidage (15a), d'une denture (1b) permettant un déplacement axial.

8. Entraînement électrique selon une des revendications 1 à 7,
caractérisé en ce que les culasses d'aimant (29) sont doublées par un élément élastique précontraint (31).

9. Entraînement électrique selon une des revendications 1 à 8,
caractérisé en ce que les broches de guidage (18) sont prolongées vers l'extérieur par les rivets creux (21).
